# EUROPEAN PATENT APPLICATION

(11) **EP 4 712 020 A1**
(43) Date of publication of application: **18.03.2026**
(21) Application number: 25159606.0
(22) Date of filing: 24.02.2025
(51) Int. Cl.: G06T 7/00

(54) **INFORMATION PROCESSING SYSTEM, PROGRAM AND METHOD**

(30) Priority: 11.09.2024 JP 2024157558
(71) Applicant: FUJIFILM Business Innovation Corp., Minato-ku Tokyo (JP)
(72) Inventor: FUKUNAGA, Kazuya, Ebina-shi (JP); AIKAWA, Kiyofumi, Ebina-shi (JP); TASAKI, Kaito, Ebina-shi (JP); KUWADA, Yoshitaka, Ebina-shi (JP)
(74) Representative: Haseltine Lake Kempner LLP

(57) **Abstract**

An information processing system includes a processor configured to: generate a three-dimensional model of a subject from an image that is captured by photographing the subject; and display information that results from comparing the image that is captured by photographing the subject with an image that is captured by rendering the three-dimensional model of the subject.

## Description

### Background

### (i) Technical Field

The present disclosure relates to an information processing system, a program and a method.

### (ii) Related Art

Japanese Unexamined Patent Application Publication No. 2021-128592 discloses an image processing apparatus. Multiple captured images are captured by photographing an object from multiple viewpoints and a virtual viewpoint image is generated in accordance with three-dimensional data of the object. The image processing apparatus removes, in the captured images and the virtual viewpoint image, noise that is generated depending on the accuracy of the three-dimensional data.

Japanese Unexamined Patent Application Publication No. 2019-191989 discloses a system that generates a virtual viewpoint image using multi-viewpoint images and background three-dimensional (3D) data representing a 3D shape of the background of a photographed scene. The system generates a simulation image responsive to a viewpoint of a camera using the background 3D data, detects a difference between the generated simulation image and an image that is actually captured from the viewpoint of the camera, and updates the background 3D data in accordance with the detections results.

In a related-art process, a 3D model is generated from an image captured by photographing a subject. In such a process, however, a difference may occur between the generated 3D model and the subject.

Verifying the difference between the subject and the 3D model by individually comparing the captured images with the 3D models is time consuming.

### Summary

Accordingly, it is an object of the present disclosure to provide an information processing system, a program and a method that facilitate verifying a 3D model of a subject more than when verification is performed by individually comparing the subject or an image of the subject with the 3D model of the subject.

According to a first aspect of the present disclosure, there is provided an information processing system including a processor configured to: generate a three-dimensional model of a subject from an image that is captured by photographing the subject; and display information that results from comparing the image that is captured by photographing the subject with an image that is captured by rendering the three-dimensional model of the subject.

In the information processing system according to a second aspect of the disclosure in view of the first aspect, the processor is configured to display on the same screen the image that is captured by photographing the subject and the image that is captured by rendering the three-dimensional model of the subject.

In the information processing system according to a third aspect of the disclosure in view of the second aspect, the processor is configured to display on the same screen the image that is captured by photographing the subject and the image that is captured by rendering the three-dimensional model of the subject in the same direction as a photographing direction of the image of the subject.

In the information processing system according to a fourth aspect of the disclosure in view of the third aspect, the processor is configured to generate the image that is captured by rendering the three-dimensional model of the subject using at least one piece of information on a photography apparatus that has photographed the subject or information on lighting that is used when the subject has been photographed.

In the information processing system according to a fifth aspect of the disclosure in view of any one of the first through fourth aspects, the processor is configured to: compare the image that is captured by photographing the subject with the image that is captured by rendering the three-dimensional model of the subject; extract a location of a difference between the three-dimensional model of the subject and the subject; and display the extracted location of the difference.

In the information processing system according to a sixth aspect of the disclosure in view of the fifth aspect, the processor is configured to extract the location of the difference between the three-dimensional model of the subject and the subject by extracting at least one piece of information on a difference in color of the subject, information on a difference in brightness of the subject or information on a difference in pattern of the subject, in the image that is captured by photographing the subject and the image that is captured by rendering the three-dimensional model in the same direction as a photographing direction of the image of the subject.

In the information processing system according to a seventh aspect of the disclosure in view of any one of the fifth and sixth aspects, the processor is configured to receive a difference extraction level as an input.

In the information processing system according to an eighth aspect of the disclosure in view of any one of the fifth through seventh aspects, the processor is configured to display a type of the extracted difference.

In the information processing system a ninth aspect of the disclosure in view of any one of the fifth through eighth aspects, the processor is configured to correct the location of the difference between the three-dimensional model of the subject and the subject.

In the information processing system according to a tenth aspect of the disclosure in view of the ninth aspect, the processor is configured to receive a difference correction level as an input.

According to an eleventh aspect of the present disclosure, there is provided a program causing a computer to execute a process, the process including: generating a three-dimensional model of a subject from an image that is captured by photographing the subject; and displaying information that results from comparing the image that is captured by photographing the subject with an image that is captured by rendering the three-dimensional model of the subject.

According to a twelfth aspect of the present disclosure, there is provided a method comprising: generating a three-dimensional model of a subject from an image that is captured by photographing the subject; and displaying information that results from comparing the image that is captured by photographing the subject with an image that is captured by rendering the three-dimensional model of the subject.

The information processing system according to the first aspect may facilitate verifying the 3D model of the subject more than when verification is performed by individually comparing the subject or the image of the subject with the 3D model of the subject.

The information processing system according to the second aspect may enable the user to concurrently view the image captured by photographing the subject and the image captured by rendering the 3D model of the subject.

The information processing system according to the third aspect may facilitate verifying the 3D model more than when the image captured by rendering the 3D model in the direction different from the photographing direction of the original image of the 3D model is displayed.

The information processing system according to the fourth aspect may generate the rendered image identical to the original image of the 3D model.

The information processing system according to the fifth aspect may enable the user to view the location of the difference between the 3D model and the subject.

The information processing system according to the sixth aspect may extract the location of the difference between the 3D model and the subject by comparing two-dimensional images.

The information processing system according to the seventh aspect may enable the user to compare the subject in the image captured by photographing the subject with the subject in the image captured by rendering the 3D model in the same direction as the photographing direction of the image of the subject and may then enable the user to arbitrarily select the degree of variation between the subjects that is considered to be the difference.

The information processing system according to the eighth aspect may enable the user to recognize the type of the extracted difference.

The information processing system according to the ninth aspect may correct the difference without the user performing a correction operation.

The information processing system according to the tenth aspect may enable the user to arbitrarily select the degree of the correction process.

The program according to the eleventh aspect may facilitate verifying the 3D model of the subject more than when verification is performed by individually comparing the subject or the image of the subject with the 3D model of the subject.

The method according to the twelfth aspect may facilitate verifying the 3D model of the subject more than when verification is performed by individually comparing the subject or the image of the subject with the 3D model of the subject.

### Brief Description of the Drawings

Exemplary embodiment of the present disclosure will be described in detail based on the following figures, wherein:
Fig. 1 illustrates a system configuration of a three-dimensional (3D) model generation system of an exemplary embodiment of the disclosure;
Fig. 2 illustrates a photographing direction in a vertical plane of a photography apparatus in the 3D model generation system;
Fig. 3 illustrates a photographing direction in a horizontal plane of the photography apparatus in the 3D model generation system;
Fig. 4 illustrates multi-viewpoint images captured by the photography apparatus in the 3D model generation system;
Fig. 5 is a block diagram illustrating a hardware configuration of an image forming apparatus in the 3D model generation system;
Fig. 6 illustrates an example of a 3D model display screen in the 3D model generation system;
Fig. 7 illustrates an example of a 3D model correction screen in the 3D model generation system;
Fig. 8 illustrates an example of the 3D model correction screen in the 3D model generation system;
Fig. 9 illustrates an example of a lighting condition detailed setting screen in the 3D model generation system;
Fig. 10 illustrates an example of a difference detail setting screen in the 3D model generation system;
Fig. 11 illustrates an example of the difference detail setting screen in the 3D model generation system;
Fig. 12 is a flowchart illustrating a user procedure when the 3D model is corrected in the 3D model generation system;
Fig. 13 illustrates an effect in a rendered image that minute unevenness noise on a surface of the 3D model causes; and
Fig. 14 illustrates an example of the 3D model correction screen in the 3D model generation system.

### Detailed Description

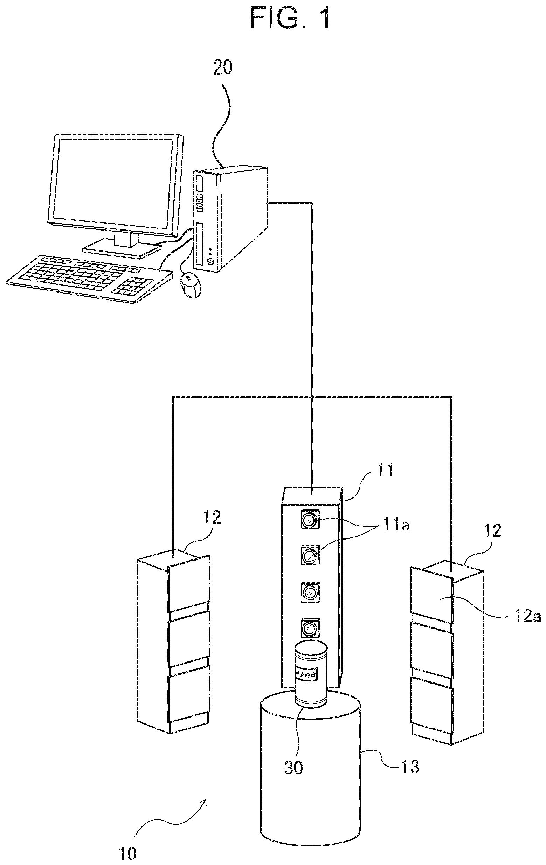

Exemplary embodiment of the disclosure is described in detail below with reference to the drawings. Fig. 1 illustrates a system configuration of a three-dimensional (3D) model generation system of an exemplary embodiment of the disclosure.

Referring to Fig. 1, the 3D model generation system of the exemplary embodiment is configurated to include a photography apparatus 10 and image processing apparatus 20.

The photography apparatus 10 includes a photographing unit 11 photographing a subject 30, lighting unit 12 radiating illumination light to the subject 30, and placement stand 13 used to place the subject 30 thereon.

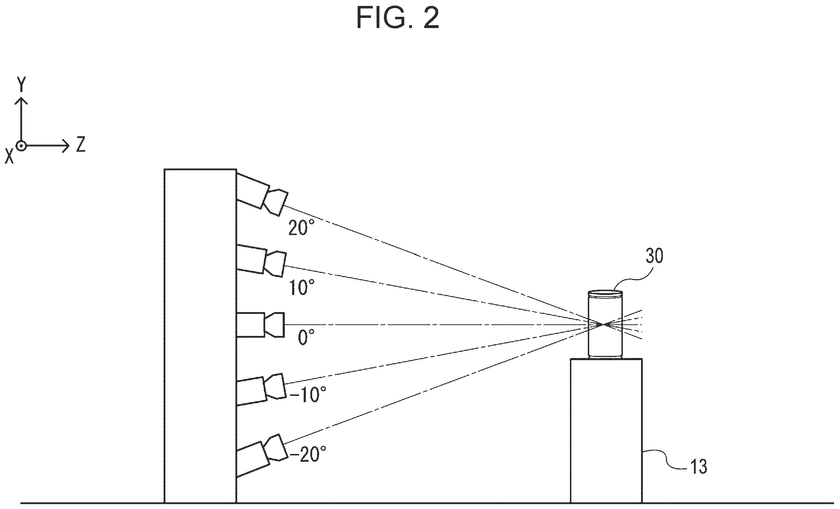

The photographing unit 11 includes multiple cameras 11a used to photograph the subject 30 placed on the placement stand 13. The cameras 11a are installed at locations of different heights. Referring to Fig. 2, the photographing unit 11 may capture images at the locations of different heights in a single direction in a horizontal plane by concurrently photographing the subject 30 with the cameras 11a.

Referring to Fig. 2, the photographing unit 11 includes, for example, five cameras 11a. The cameras 11a are respectively arranged at angles of 20 degrees, 10 degrees, 0 degrees, -10 degrees, and -20 degrees with respect to the subject 30 in a vertical plane.

The lighting unit 12 includes multiple lights 12a that radiate illumination light to the subject 30 placed on the placement stand 13. The lights 12a are installed at locations of different heights.

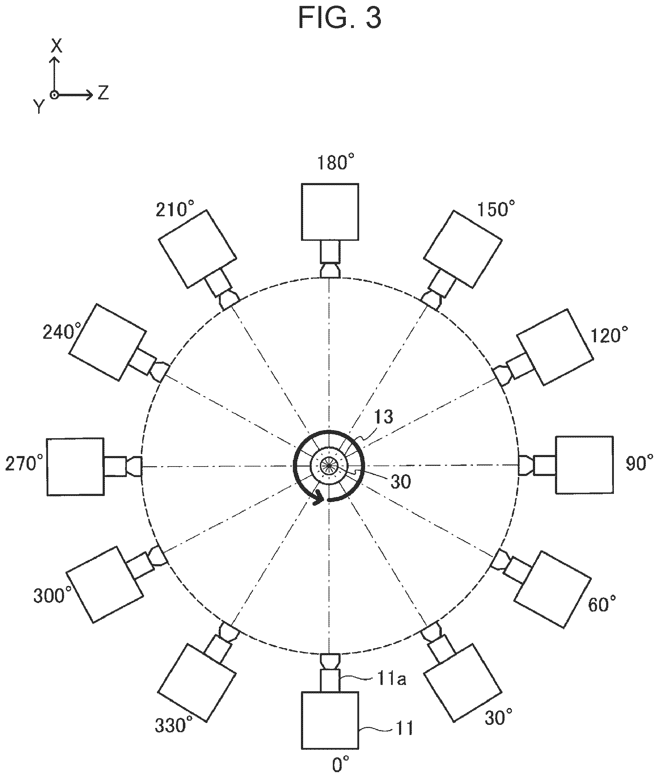

The placement stand 13 is configurated to be rotatable in a horizontal plane. The photographing direction of the photographing unit 11 toward the subject 30 may be varied by rotating with a set angular pitch the placement stand 13 having the subject 30 placed thereon as illustrated in Fig. 3.

According to the exemplary embodiment, the angular pitch of the placement stand 13 is, for example, 10 degrees. The photographing directions are partially omitted and illustrated at 30 degree pitch as illustrated in Fig. 3.

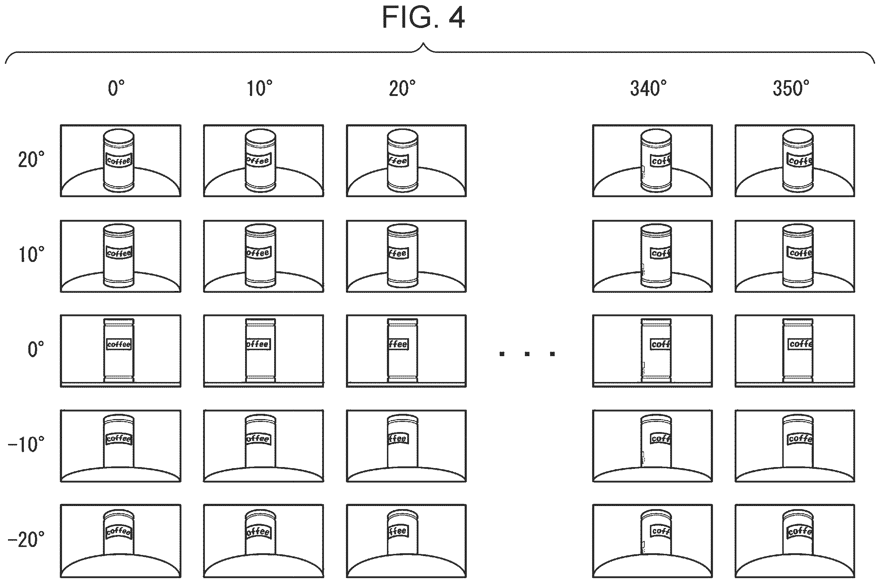

The photography apparatus 10 may obtain multi-viewpoint images as illustrated in Fig. 4 by photographing the subject 30 with the photographing unit 11 multiple times with the photographing direction of the photographing unit 11 toward the subject 30 varied.

According to the exemplary embodiment, photographing is performed at five photographing directions of 20 degrees, 10 degrees, 0 degrees, -10 degrees, and -20 degrees toward the subject 30 in a vertical plane and in a single photographing direction in a horizontal plane. Photographing is also performed toward the subject 30 at 36 photographing directions at a rotational angler pitch of 10 degrees within a range of 0 degrees to 350 degrees. As a result, multi-viewpoint images are captured by photographing the subject 30 at 180 patterns.

Photographing conditions during photographing including the photographing direction in the vertical plane, the photographing direction in the horizontal plane, and lighting condition are known with respect to each of the multi-viewpoint images. Each of the multi-viewpoint images is recorded together with the photographing conditions on the image processing apparatus 20.

The image processing apparatus 20 generates a three-dimensional model (3D) model of the subject 30 using the multi-viewpoint images of the subject 30 captured by the photography apparatus 10. For example, a computer or the like may be used as the image processing apparatus 20. The image processing apparatus 20 is an example of an information processing system in a technique disclosed in the disclosure.

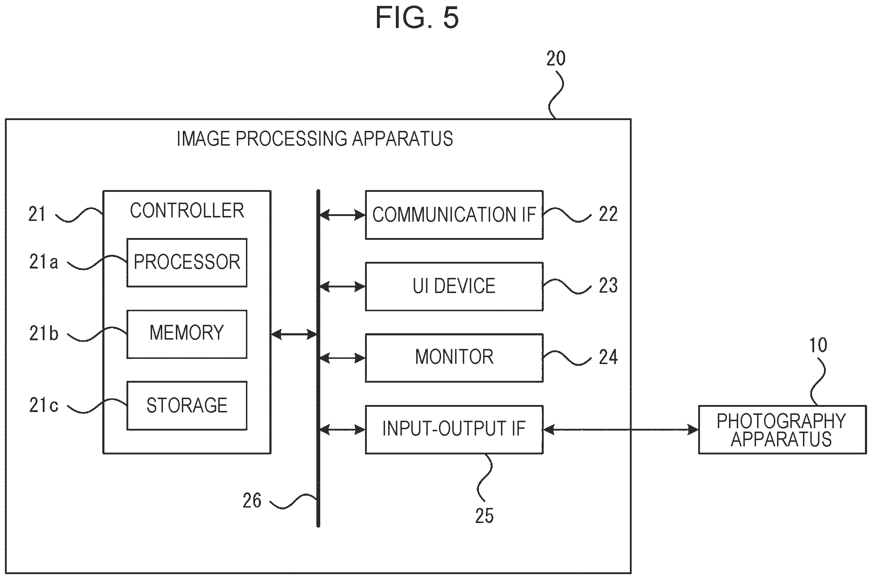

Hardware configuration of the image processing apparatus 20 of the exemplary embodiment is described below. Fig. 5 is a block diagram illustrating the hardware configuration of the image processing apparatus 20.

As illustrated in Fig. 5, the image processing apparatus 20 includes a controller 21, communication interface (IF) 22, user interface (UI) device 23, monitor 24 and input-output IF 25. These elements are interconnected to each other via a control bus 26.

The controller 21 includes a processor 21a, memory 21b and storage 21c. The processor 21a executes a predetermined process in accordance with a program that is read from the storage 21c and loaded onto the memory 21b. The storage 21c is configurated to include a read-only memory (ROM), hard-disk drive (HDD) or solid-state drive (SSD). The storage 21c stores a variety of programs, data, and the like.

According to the embodiment, the processor 21a reads the program from the storage 21c and executes the read program. The disclosure is not limited to this method. The program may be supplied in a recorded form on a computer-readable recording medium. Alternatively, the program may be obtained from an external apparatus via a communication network.

The communication IF 22 transmits data to or receives data from an external apparatus and the like. The UI device 23 includes a keyboard and/or a mouse and is used by a user to receive or input information. The monitor 24 is used to display information, such as an image generated by the controller 21. The input-output IF 25 is an interface used to connect to a peripheral apparatus, such as the photography apparatus 10.

The controller 21 in the image processing apparatus 20 generates a 3D model of the subject 30 using the multi-viewpoint images of the subject 30 captured by the photography apparatus 10.

The 3D model generation system of the exemplary embodiment generates the 3D model of the subject 30, for example, as described below.

Using the technique called structure from motion (SFM), the controller 21 first estimates the position and photographing direction of the camera that has captured each of the multi-viewpoint images of the subject 30.

Using a technique referred to as multi-view stereo (MVS), the controller 21 performs a point-cloud measurement through multi-view image measurement based on triangulation and thus acquires 3D point cloud.

The controller 21 links the 3D point cloud using triangular or square meshes and thus configurates a surface. The controller 21 then generates a texture corresponding to the configurated surface using the multi-viewpoint images.

These processes are related-art techniques and are not described in detail herein.

The 3D model thus generated may have a difference from the subject 30. It may be time consuming to verify the difference between the subject 30 and the 3D model by individually comparing the image captured by photographing the subject 30 with the 3D model.

To address this problem, the controller 21 in the image processing apparatus 20 generates the 3D model of the subject 30 from the image captured by photographing the subject 30 and displays information that compares the image captured by photographing the subject 30 with an image captured by rendering the 3D model of the subject 30.

The "comparison of the image captured by photographing the subject 30 with the image captured by rendering the 3D model of the subject 30" may be performed in two modes as described below.

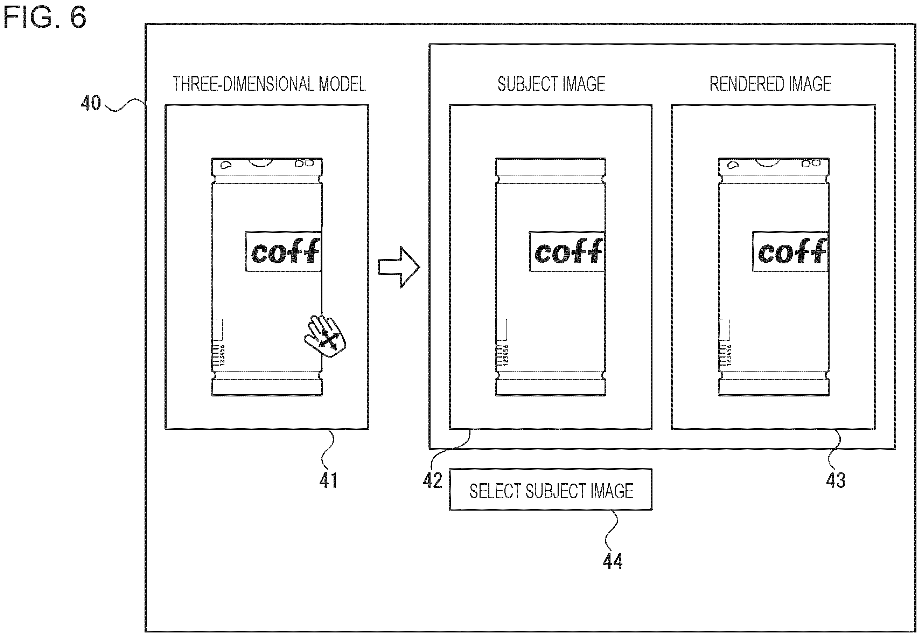

In a first mode, the controller 21 may display on the same screen, as illustrated in Fig. 6, the image captured by photographing the subject 30 and the image captured by rendering the 3D model of the subject 30.

In such a case, as illustrated in Fig. 6, the controller 21 may display on the same screen the image captured by photographing the subject 30 and the image captured by rendering the 3D model of the subject 30 in the same direction as the photographing direction of the image.

In the following discussion, the image captured by photographing the subject 30, namely, each of the multi-viewpoint images captured by the photography apparatus 10, is referred to as a subject image. The image captured by rendering the 3D model of the subject 30 is referred to as a rendered image.

A 3D model display screen 40 illustrated in Fig. 6 includes, for example, a display direction input part 41, subject image display part 42, rendered image display part 43 and subject image selection button 44.

The display direction input part 41 is used to enter the display direction in which the subject image and rendered image are displayed. The display direction input part 41 displays the 3D model of the subject 30.

The 3D model of the subject 30 displayed in the display direction input part 41 may be the same as the rendered image displayed in the rendered image display part 43 described below or an image that is lower in image resolution than the rendered image.

The subject image display part 42 is used to display a subject image among multiple subject images forming the multi-viewpoint images.

The rendered image display part 43 is used to display an image captured by rendering a 3D model.

The subject image selection button 44 is used to select the subject image to be displayed in the subject image display part 42.

The following two methods are available to select images to be displayed in the subject image display part 42 and rendered image display part 43.

In a first method, the subject image and rendered image are displayed with respect to a display direction input in the display direction input part 41.

When the user has moved a mouse in an up-down direction in the display direction input part 41, the controller 21 rotates the 3D model of the subject 30 in a vertical direction in response to the movement amount of the mouse. Also, when the user has moved the mouse in a left-right direction in the display direction input part 41, the controller 21 rotates the 3D model of the subject 30 in a horizontal direction in response to the movement amount of the mouse.

When the user has changed the display direction in the display direction input part 41, the controller 21 displays the subject image in the photographing direction corresponding to the input display direction in the subject image display part 42.

The photographing direction of each subject image may be acquired from information on the photographing direction that is estimated on each subject image through the SFM process.

As previously described, each subject image is recorded together with the photographing conditions including the photographing direction in the vertical plane, the photographing direction in the horizontal plane, and lighting condition during photographing. For this reason, the photographing direction of each subject image may be acquired from the information on the photographing conditions stored together with each subject image. The photographing direction of each subject image may be acquired using both information on the photographing direction estimated through the SFM process and the information on the photographing conditions recorded together with each subject image.

The photographing direction of the subject image displayed in the subject image display part 42 may be exactly the same as the display direction or, in view of error, may be slightly different from the display direction input in the display direction input part 41.

For example, an error in the horizontal direction may include an error of ±rotational angular pitch/2 degrees in view of a rotational angular pitch of the placement stand 13 when the photography apparatus 10 photographs the subject 30 for the multi-viewpoint images of the subject 30.

Specifically, the error in the horizontal direction may include an error of ±5 degrees in the horizontal direction when the photography apparatus 10 photographs 36 times the subject 30 all around with the rotational angular pitch of 10 degrees in the horizontal direction of the placement stand 13.

An error in the vertical direction may include an error of ±photographing angular pitch/2 degrees in view of an installation pitch of the cameras 11a in the photographing unit 11 of the photography apparatus 10 and a photographing angular pitch determined depending on the distance between the photographing unit 11 and the placement stand 13.

Specifically, the error in the vertical direction may include an error of ±5 degrees in the vertical direction when the photographing angle pitch in the vertical plane is 10 degrees.

Although displaying is based on the display direction input in the display direction input part 41, the subject image captured in a photographing direction closest to the display direction may be displayed.

The controller 21 updates the rendered image to be displayed in the rendered image display part 43 when the display direction in the display direction input part 41 is changed.

The rendered image to be displayed in the rendered image display part 43 may be a rendered image that is captured in the same direction as the photographing direction of the subject image to be displayed in the subject image display part 42. The rendered image to be displayed in the rendered image display part 43 may also be a rendered image that is captured in the same direction as the display direction input in the display direction input part 41.

In order to compare the subject image with the rendered image, the photographing direction of the rendered image to be displayed in the rendered image display part 43 may be the same direction as the photographing direction of the subject image to be displayed in the subject image display part 42.

The controller 21 may then generate an image captured by rendering the 3D model of the subject 30, using information on the photographing conditions recorded together with each subject image. Using the information on the photographing conditions, the controller 21 may generate the rendered image under the same photographing direction and lighting condition as in the subject image.

According to the exemplary embodiment, in view of the above discussion, the controller 21 displays in the subject image display part 42 the subject image captured in the photographing direction having a horizontal angle of 20 degrees and a vertical angle of 10 degrees when a display direction having a horizontal angle of 20 degrees and a vertical angle of 10 degrees is input in the display direction input part 41. The controller 21 displays in the rendered image display part 43 the rendered image captured in a photographing direction having a horizontal angle of 20 degrees and a vertical angle of 10 degrees.

When a display direction having a horizontal angle of 27 degrees and a vertical angle of 12 degrees is input in the display direction input part 41, the controller 21 displays in the subject image display part 42 the subject image captured in the photographing direction having a horizontal angle of 30 degrees and a vertical angle of 10 degrees closest to the input display direction. The controller 21 displays in the rendered image display part 43 the rendered image captured in the same photographing direction having a horizontal angle of 30 degrees and a vertical angle of 10 degrees as the photographing direction of the subject image.

In a second method, the subject image and rendered image are displayed with respect to the subject image selected by the subject image selection button 44.

When the subject image selection button 44 is selected, the controller 21 displays an image file selection screen and is ready to receive an input of a subject image the user may want to display.

The controller 21 displays the subject image input by the user in the subject image display part 42. The controller 21 also displays in the rendered image display part 43 the rendered image that has been captured in the same direction as the photographing direction of the subject image to be displayed in the subject image display part 42.

The "comparison of the image captured by photographing the subject 30 with the image captured by rendering the 3D model of the subject 30" may be performed in a second mode as described below.

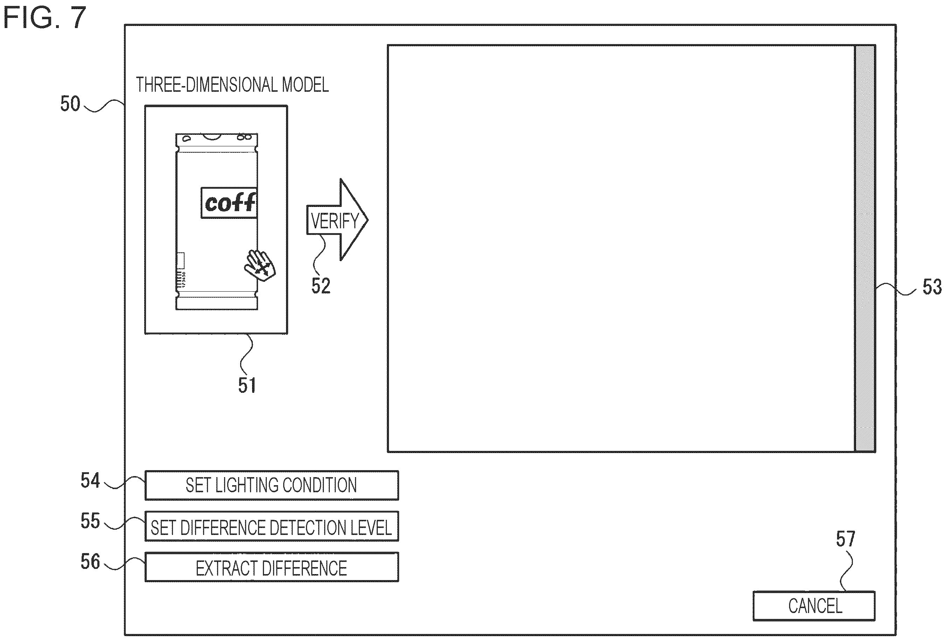

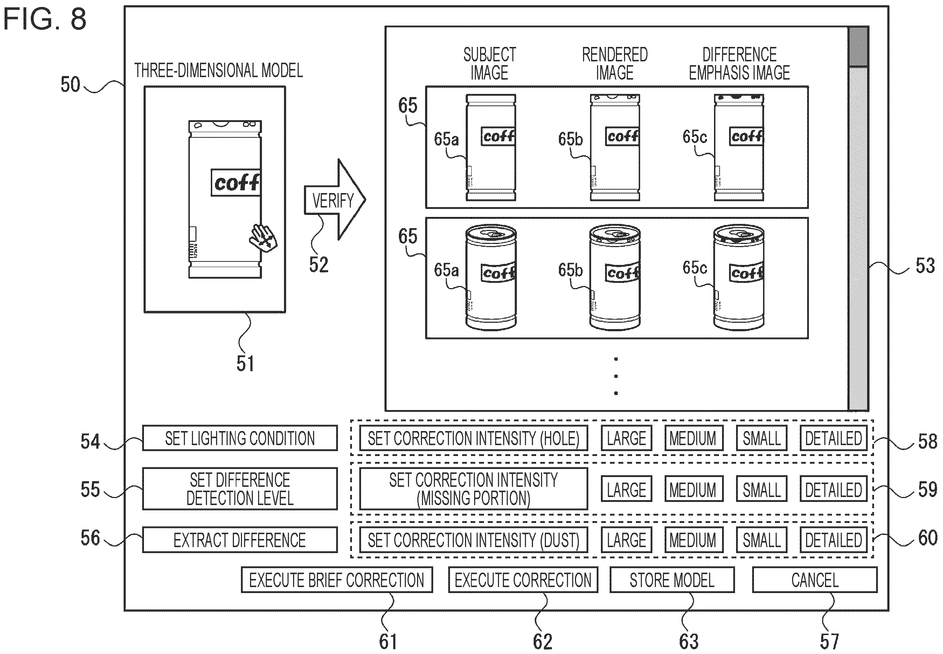

In the second mode, as illustrated in Figs. 7 and 8, the controller 21 may compare a captured image of the subject 30 with a rendered image of the 3D model of the subject 30, extract a location of a difference between the 3D model of the subject 30 and the subject 30, and display the extracted location of the difference.

The controller 21 may extract the location of the difference between the 3D model of the subject 30 and the subject 30, by extracting at least one piece of information selected from the group consisting of a difference in the color of the subject, a difference in the brightness of the subject, and a difference in the pattern of the subject in the image captured by photographing the subject and the image captured by rendering the 3D model of the subject in the same direction as the photographing direction.

The controller 21 may receive the input of a difference extraction level and display the type of the extracted difference.

The controller 21 may correct in the 3D model of the subject 30 the location of the difference between the subject 30 and the 3D model of the subject 30. In that case, the controller 21 may receive the input of a difference correction level.

A 3D model correction screen 50 illustrated in Fig. 7 includes, for example, a display direction input part 51, verification button 52, image display part 53, lighting condition setting button 54, difference detection level setting button 55, difference extraction button 56 and cancel button 57.

The display direction input part 51 is used to input the display direction that is to be displayed concerning the subject image and rendered image. The display direction input part 51 displays the 3D model of the subject 30.

The verification button 52 is used to display a comparison image group including the subject image and rendered image in the display direction input in the display direction input part 51 and a difference-emphasis-display rendered image that displays with emphasis the location of the difference from the subject image.

The photographing direction of each of the displayed subject image, rendered image and difference-emphasis-display rendered image is the same as in the 3D model display screen 40.

Before the controller 21 extracts the difference between the subject image and rendered image with the difference extraction button 56 pressed, the difference-emphasis-display rendered image is not displayed even when the verification button 52 is pressed.

The image display part 53 is used to display a comparison image group on a per display direction basis.

The lighting condition setting button 54 is used to select a lighting condition.

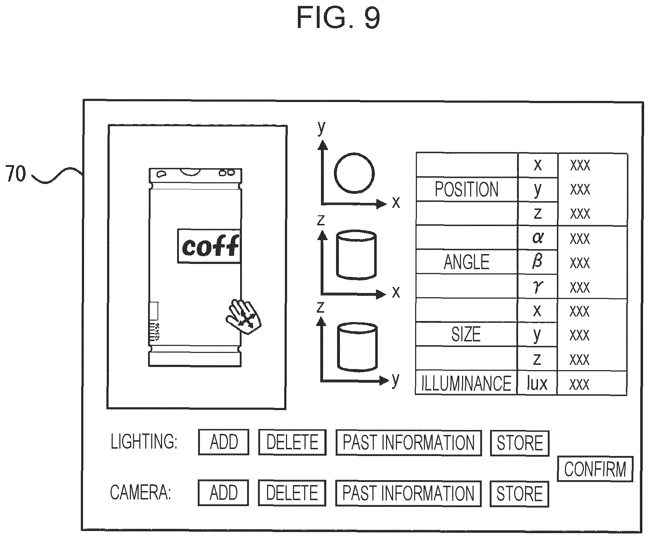

When the lighting condition setting button 54 is pressed, the controller 21 displays a lighting condition detail setting screen 70 illustrated in Fig. 9. Position, angle, illuminance, and the like of a light used when a rendered image is generated may be set in the lighting condition detail setting screen 70. Position, angle, and the like of a camera used when a rendered image is generated may be set in the lighting condition detail setting screen 70.

The difference detection level setting button 55 is used to set a detection level according to which the difference between the subject image and rendered image is detected.

When the difference detection level setting button 55 is pressed, the controller 21 displays a difference detection setting screen (not illustrated). The degree of difference between the subject image and rendered image which is to be recognized as a difference may be set in the difference detection setting screen. To input the degree of difference, buttons for "large," "medium," and "small" may be arranged or a slide bar may be arranged.

The difference extraction button 56 is used to extract the difference between the subject image and rendered image.

The cancel button 57 is used to close the 3D model correction screen 50.

When the difference extraction button 56 is pressed in the 3D model correction screen 50, the controller 21 extracts the difference between the subject image and rendered image on a per type of difference basis. For example, the controller 21 detects a difference in three types of difference including hole, missing portion and dust in the 3D model correction screen 50.

The hole is related to a shape of a 3D model and signifies a missing part fully surrounded by a normal part. The missing portion is related to the shape of the 3D model and signifies a missing part partly surrounded by a normal part. The dust is related to the shape of the 3D model and signifies a thing that is not present as a part of the subject.

The detection of difference is performed by extracting at least one piece of information selected from the group consisting of a difference in the shape, a difference in the color, a difference in the brightness, and a difference in the pattern of the subject 30 in the subject image and rendered image captured in the same photographing direction.

In the detection of the difference between the subject image and rendered image, the controller 21 may detect not only the difference in the 3D model described above but also a difference in a texture reflected in the 3D model. The detection of the texture may be performed by extracting at least one piece of information selected from the group consisting of a difference in the shape, a difference in the color, a difference in the brightness, and a difference in the pattern of the subject 30 in the subject image and rendered image captured in the same photographing direction. When the difference of the texture has been performed, an image of texture may be modified to closer to the subject image in the same manner as in the correction of the shape of the 3D model described below.

In the detection of the difference in the shape of the 3D model, the controller 21 may extract the outline of the subject 30 in the subject image and the outline of the subject 30 in the rendered image, captured in the same photographing direction, and compare the outlines. In the detection of the difference in the texture reflected in the 3D model, the controller 21 may compare the same regions in the subjects 30 in the subject image and rendered image captured in the same photographing direction. The detection of the difference is not limited to the methods described above and any method may be used. These processes are related-art techniques and are not described in detail herein.

After the difference is extracted, the controller 21 displays the 3D model of the subject 30 with the difference displayed in the display direction input part 51 as illustrated in Fig. 8.

When the verification button 52 is pressed, the controller 21 displays in the image display part 53 a comparison image group 65 including a subject image 65a and a rendered image 65b responsive to the display direction input in the display direction input part 51, and a difference-emphasis-display rendered image 65c with the location of difference from the subject image emphasized.

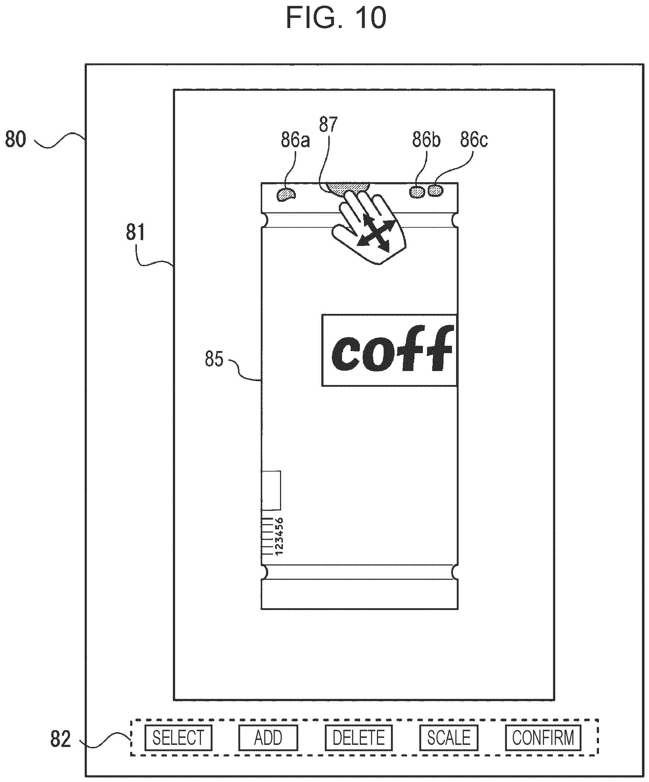

When the difference-emphasis-display rendered image 65c is pressed in the comparison image group 65, the controller 21 displays a difference detail setting screen 80 illustrated in Fig. 10.

Referring to Fig. 10, the difference detail setting screen 80 includes a difference-emphasis-display rendered image display part 81 and an operation button group 82.

The difference-emphasis-display rendered image display part 81 displays an expanded image of the difference-emphasis-display rendered image. Referring to Fig. 10, differences as holes 86a, 86b, and 86c and difference as missing portion 87 are extracted in the 3D model of a coffee can 85 serving as the subject 30.

Referring to Fig. 10, the differences as the holes 86a, 86b, and 86c and difference as the missing portion 87 are displayed in the same color but may be displayed in different colors on a per type of difference basis. As described below, when a difference is corrected, the corrected location may be displayed in a color different from the color of the location of difference.

The operation button group 82 includes buttons for select, add, delete, confirm and the like and enables the user to perform the following operations.

The user may add or delete a portion of difference manually in the difference detail setting screen 80. The user may also modify the range of difference by pressing an image of the portion of difference.

When the information on the difference is changed in the difference detail setting screen 80, the controller 21 reflects, in conjunction with the changing, correction results in an image in another photographing direction displayed in the image display part 53.

After the extraction of the difference, the controller 21 displays a correction intensity setting part (hole) 58, correction intensity setting part (missing portion) 59 and correction intensity setting part (dust) 60 in the 3D model correction screen 50 as illustrated in Fig. 8.

The correction intensity setting part (hole) 58 is a button group used to set the correction intensity of the differences as the holes and including buttons for large, medium, small, and detailed settings.

The large-setting, medium-setting and small-setting buttons are used to uniformly to respectively set large, medium, and small correction intensities concerning the correction intensity of all the differences as the holes.

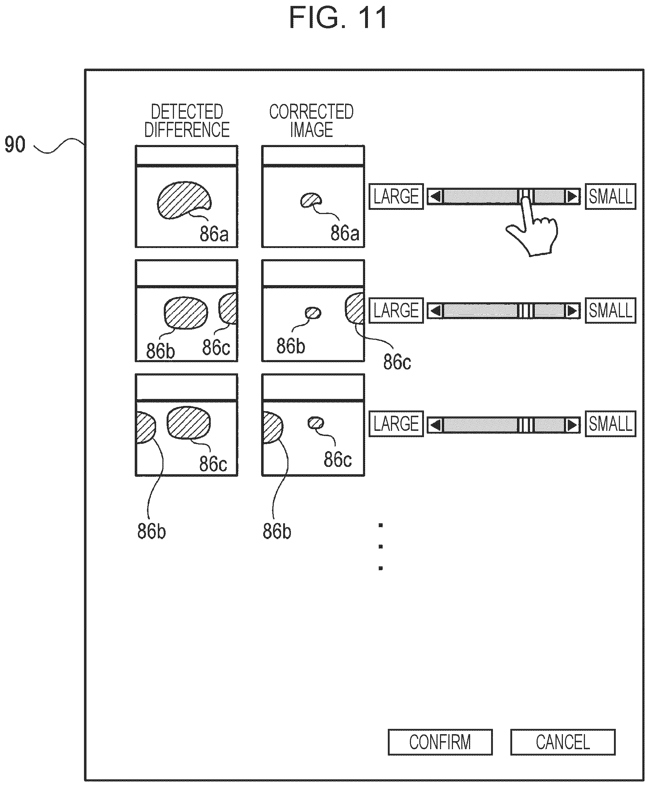

The detailed-setting button is used to set individually a correction intensity on each of the differences as the holes. When the detailed-setting button is pressed, the controller 21 displays a difference detailed setting screen 90 as illustrated in Fig. 11. In the difference detailed setting screen 90, the differences as the holes are individually displayed and the correction intensity may be set on a per difference basis using a slide bar.

The correction intensity setting part (missing portion) 59 is a button group used to set a correction intensity of a difference as a missing portion and including buttons for large, medium, small, and detailed settings. The function of each button is the same as in the correction intensity setting part (hole) 58.

The correction intensity setting part (dust) 60 is a button group used to set a correction intensity of a difference as dust and including buttons for large, medium, small, and detailed settings. The function of each button is the same as in the correction intensity setting part (hole) 58.

Regardless of the type of difference extracted as described above, the mode of displaying the correction intensity setting part is not limited to the mode of displaying the correction intensity setting part (hole) 58, the correction intensity setting part (missing portion) 59 and the correction intensity setting part (dust) 60.

For example, only the correction intensity setting part corresponding to the type of difference extracted may be displayed. Specifically, when the differences as the holes 86a, 86b and 86c and difference as the missing portion 87 are extracted, only the correction intensity setting part (hole) 58 and correction intensity setting part (missing portion) 59 may be displayed.

The correction intensity setting part may be displayed in a non-active state on each type of difference before the difference extraction and only the correction intensity setting part of the type of the extracted difference is displayed in an active state after the difference extraction.

After the execution of the difference extraction, the controller 21 displays a brief correction execution button 61, correction execution button 62 and model storage button 63 in the 3D model correction screen 50 as illustrated in Fig. 8.

The brief correction execution button 61 is used to execute brief correction on the 3D model of the subject 30. The brief correction corrects all the differences with a uniform intensity regardless of the settings of the correction intensity setting part (hole) 58, correction intensity setting part (missing portion) 59 and correction intensity setting part (dust) 60. When the brief correction execution button 61 is pressed, the controller 21 executes the brief correction on the 3D model.

The correction execution button 62 is used to correct the 3D model of the subject 30 in accordance with the settings of the correction intensity setting part (hole) 58, correction intensity setting part (missing portion) 59 and correction intensity setting part (dust) 60. After the difference is extracted and the correction intensity is set on the extracted difference as described above, the correction execution button 62 may be pressed. The controller 21 then corrects the 3D model in accordance with the contents of the settings.

The model storage button 63 is used to store the 3D model of the subject 30. When the model storage button 63 is pressed, the controller 21 stores a current 3D model.

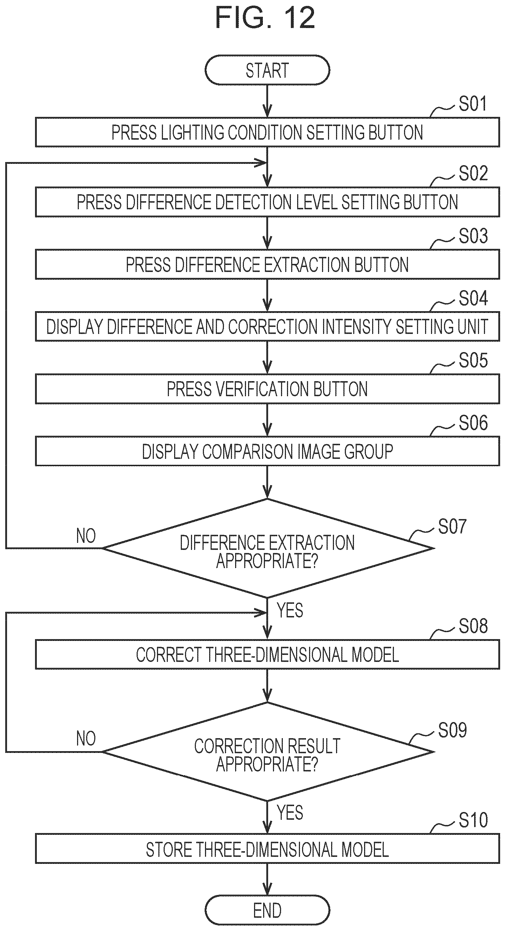

An example of a user procedure during the correction of the 3D model in the 3D model correction screen 50 is described with reference to a flowchart in Fig. 12.

The user first presses the lighting condition setting button 54 in step S01 to set a lighting condition during rendered image generation.

In step S02, the user presses the difference detection level setting button 55 to set a detection level according to which a difference between the subject image and rendered image is detected.

In step S03, the user presses the difference extraction button 56 to extract the difference between the subject image and rendered image.

When the difference extraction button 56 is pressed, the controller 21 displays the difference between the subject image and rendered image with emphasis and the correction intensity setting part in step S04.

The user presses in step S05 the verification button 52 to display in step S06 the comparison image group including the subject image and rendered image corresponding to the display direction input in the display direction input part 51 and the difference-emphasis-display rendered images.

In step S07, the user determines whether the extraction of the difference in the 3D model of the subject 30 is appropriate.

Upon determining in step S07 that the extraction of the difference in the 3D model of the subject 30 is not appropriate, the user returns to step S02 to start over with the setting of the detection level.

Upon determining in step S07 that the extraction of the difference in the 3D model of the subject 30 is appropriate, the user corrects the 3D model in step S08.

In step S09, the user determines whether correction results on the 3D model of the subject 30 are appropriate.

Upon determining in step S09 that the correction results on the 3D model of the subject 30 are not appropriate, the user returns to step S08 to start over with the correction of the 3D model.

Upon determining in step S09 that the correction results on the 3D model of the subject 30 are appropriate, the user stores the 3D model in step S10 and then ends the correction of the 3D model.

The difference between the subject and the 3D model is not limited to the hole, missing portion and dust. A minute unevenness shape on a surface of the 3D model may be varied by minute unevenness noise.

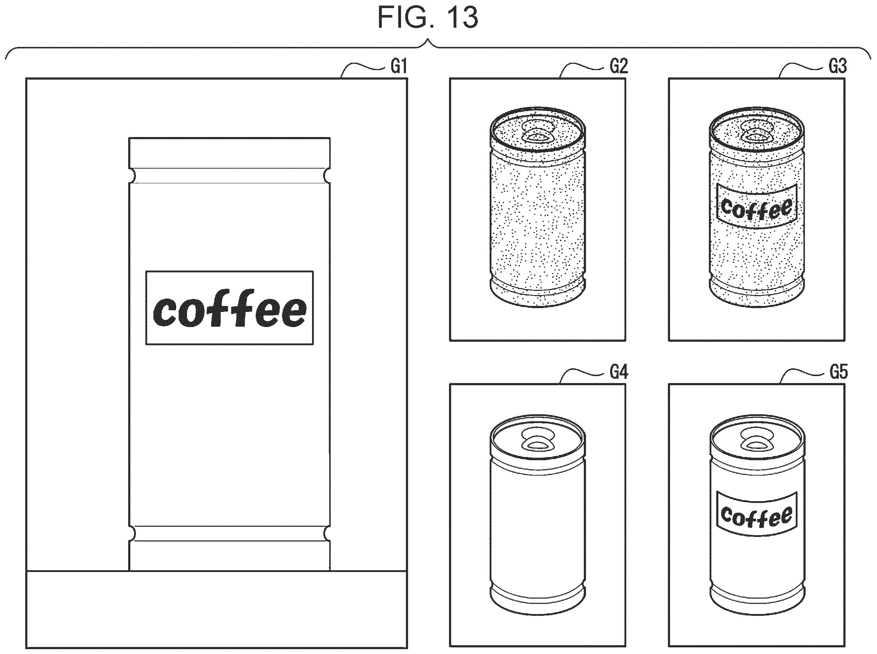

Fig. 13 illustrates an effect in a rendered image that the minute unevenness noise on the surface of the 3D model causes.

Referring to Fig. 13, an image G1 is a subject image captured by photographing the subject 30. An image G2 illustrates a state of a rendered image without texture in which minute unevenness noise occurs on the surface of the 3D model of the subject 30. An image G3 illustrates a state of a rendered image with texture in which minute unevenness noise occurs on the surface of the 3D model of the subject 30. An image G4 illustrates a state of a rendered image without texture in which minute unevenness noise does not occur on the surface of the 3D model of the subject 30. An image G5 illustrates a state of a rendered image with texture in which minute unevenness noise does not occur on the surface of the 3D model of the subject 30.

Referring to the image G1, the subject 30 is a coffee can having a smooth surface. If the minute unevenness noise occurs on the surface of the 3D model of the coffee can as illustrated in the image G2, asperities are generated the surface of the coffee can in the final rendered image as illustrated in the image G3, thus making the coffee can different in quality.

A smoothing process, if performed on the 3D model having the minute unevenness noise thereon as illustrated in the image G4, may provide a quality closer to the original coffee can in the final rendered image as illustrated in the image G5.

However, if the smoothing process is performed on a 3D model of a subject having minute unevenness formed on the surface thereof, such as an unglazed pot (not illustrated), the pot has a smooth surface and looks different in quality in a final rendered image.

The controller 21 may correct such minute unevenness on the surface of the 3D model.

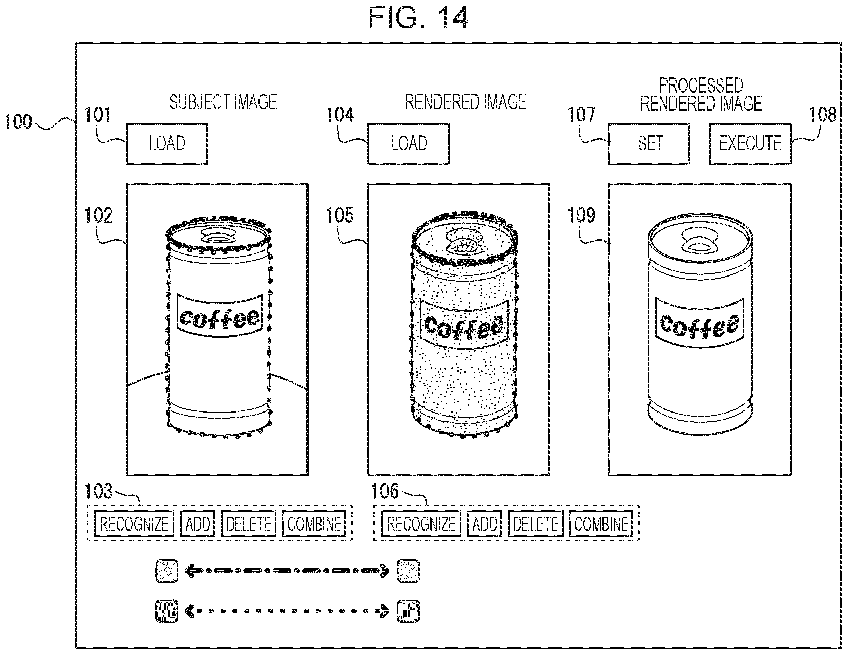

A 3D model correction screen 100 illustrated in Fig. 14 includes, for example, a load button 101, subject image display part 102, and operation button group 103. The load button 101 is used to load the subject image. The subject image display part 102 is a region where the loaded subject image is displayed. The operation button group 103 includes buttons used to perform a variety of operations on the loaded subject image.

The 3D model correction screen 100 further includes a load button 104, rendered image display part 105 and operation button group 106. The load button 104 is used to load a rendered image. The rendered image display part 105 is a region where the loaded rendered image is displayed. The operation button group 106 includes buttons used to perform a variety of operations on the loaded rendered image.

The 3D model correction screen 100 further includes a setting button 107, execute button 108 and rendered image display part 109. The setting button 107 is used to set an intensity of the smoothing process on the 3D model. The execute button 108 is used to execute the smoothing process on the 3D model. The rendered image display part 109 serves as a region where the rendered image of the 3D model having undergone the smoothing process is displayed.

The user may set each of the portions of the subject in the subject image and rendered image in the 3D model correction screen 100. For example, the user may set a top portion and a side portion of the coffee can serving as a subject to be different portions. Each of the portions of the coffee can may be set by a drag operation of the user or may be automatically set by the controller 21 when a recognize button is pressed in the operation button group 106.

Concerning each of the portions set in each of the subject image and rendered image, the portions at the same location may be displayed in association with each other in the 3D model correction screen 100. The portions may be associated with each other by a drag operation of the user or may be automatically recognized and associated with each other by the controller 21. In association displaying, the portions at the same location may be enclosed by the line of the same color and/or the line of the same type.

By displaying the portions at the same location of the subject 30 in each of the subject image and rendered image in association with each other, the user may determine how much minute unevenness on the surface of the 3D model are to be corrected.

The user sets the intensity of the smoothing process on the 3D model by pressing the setting button 107. The user then pressed the execute button 108.

When the execute button 108 is pressed, the controller 21 executes the smoothing process on the 3D model in accordance with the contents of the settings.

### Modifications

The 3D model generation system of the exemplary embodiment of the disclosure has been described. The technique of the disclosure is not limited to the exemplary embodiment and may be appropriately modified.

For example, the generation method of the 3D model of the subject 30 is not limited to the method described above and any method may be employed.

The disclosure is not limited to the mode in which the 3D model is generated from the multi-viewpoint images that are captured by photographing the subject 30 in multiple directions. For example, the 3D model may be generated from a single image using artificial intelligence (AI).

The emphasis displaying of the difference location is not limited to the rendered image. The emphasis displaying may be performed on the subject image or on both the subject image and rendered image.

In the exemplary embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiment above, and may be changed.

According to the technique of the exemplary embodiment, the term "system" in the exemplary embodiment may include a single apparatus or multiple apparatuses.

The technique of the exemplary embodiment may be applied a program and a program product.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a processor configured to:
   generate a three-dimensional model of a subject from an image that is captured by photographing the subject; and
   display information that results from comparing the image that is captured by photographing the subject with an image that is captured by rendering the three-dimensional model of the subject.
(((2))) In the information processing system according to (((1))), the processor is configured to display on the same screen the image that is captured by photographing the subject and the image that is captured by rendering the three-dimensional model of the subject.
(((3))) In the information processing system according to (((2))), the processor is configured to display on the same screen the image that is captured by photographing the subject and the image that is captured by rendering the three-dimensional model of the subject in the same direction as a photographing direction of the image of the subject.
(((4))) In the information processing system according to (((3))), the processor is configured to generate the image that is captured by rendering the three-dimensional model of the subject using at least one piece of information on a photography apparatus that has photographed the subject or information on lighting that is used when the subject has been photographed.
(((5))) In the information processing system according to one of (((1))) through (((4))), the processor is configured to:
   compare the image that is captured by photographing the subject with the image that is captured by rendering the three-dimensional model of the subject;
   extract a location of a difference between the three-dimensional model of the subject and the subject; and
   display the extracted location of the difference.
(((6))) In the information processing system according to (((5))), the processor is configured to extract the location of the difference between the three-dimensional model of the subject and the subject by extracting at least one piece of information on a difference in color of the subject, information on a difference in brightness of the subject or information on a difference in pattern of the subject, in the image that is captured by photographing the subject and the image that is captured by rendering the three-dimensional model in the same direction as a photographing direction of the image of the subject.
(((7))) In the information processing system according to one of (((5))) and (((6))), the processor is configured to receive a difference extraction level as an input.
(((8))) In the information processing system according to one of (((5))) through (((7))), the processor is configured to display a type of the extracted difference.
(((9))) In the information processing system one of (((5))) through (((8))), the processor is configured to correct the location of the difference between the three-dimensional model of the subject and the subject.
(((10))) In the information processing system according to (((9))), the processor is configured to receive a difference correction level as an input.
(((11))) A program causing a computer to execute a process including:
   generating a three-dimensional model of a subject from an image that is captured by photographing the subject; and
   displaying information that results from comparing the image that is captured by photographing the subject with an image that is captured by rendering the three-dimensional model of the subject.

Effects of the configurations in the appendix are described below.

The information processing system according to (((1))) may facilitate verifying the 3D model of the subject more than when verification is performed by individually comparing the subject or the image of the subject with the 3D model of the subject.

The information processing system according to (((2))) may enable the user to concurrently view the image captured by photographing the subject and the image captured by rendering the 3D model of the subject.

The information processing system according to (((3))) may facilitate verifying the 3D model more than when the image captured by rendering the 3D model in the direction different from the photographing direction of the original image of the 3D model is displayed.

The information processing system according to (((4))) may generate the rendered image identical to the original image of the 3D model.

The information processing system according to (((5))) may enable the user to view the location of the difference between the 3D model and the subject.

The information processing system according to (((6))) may extract the location of the difference between the 3D model and the subject by comparing two-dimensional images.

The information processing system according to (((7))) may enable the user to compare the subject in the image captured by photographing the subject with the subject in the image captured by rendering the 3D model in the same direction as the photographing direction of the image of the subject and may then enable the user to arbitrarily select the degree of variation between the subjects that is considered to be the difference.

The information processing system according to (((8))) may enable the user to recognize the type of the extracted difference.

The information processing system according to (((9))) may correct the difference without the user performing a correction operation.

The information processing system according to (((10))) may enable the user to arbitrarily select the degree of the correction process.

The information processing system according to (((11))) may facilitate verifying the 3D model of the subject more than when verification is performed by individually comparing the subject or the image of the subject with the 3D model of the subject.

## Claims

1. An information processing system comprising:
a processor configured to:
generate a three-dimensional model of a subject from an image that is captured by photographing the subject; and
display information that results from comparing the image that is captured by photographing the subject with an image that is captured by rendering the three-dimensional model of the subject.

2. The information processing system according to claim 1, wherein the processor is configured to display on the same screen the image that is captured by photographing the subject and the image that is captured by rendering the three-dimensional model of the subject.

3. The information processing system according to claim 2, wherein the processor is configured to display on the same screen the image that is captured by photographing the subject and the image that is captured by rendering the three-dimensional model of the subject in the same direction as a photographing direction of the image of the subject.

4. The information processing system according to claim 3, wherein the processor is configured to generate the image that is captured by rendering the three-dimensional model of the subject using at least one piece of information on a photography apparatus that has photographed the subject or information on lighting that is used when the subject has been photographed.

5. The information processing system according to one of claims 1 through 4, wherein the processor is configured to:
compare the image that is captured by photographing the subject with the image that is captured by rendering the three-dimensional model of the subject;
extract a location of a difference between the three-dimensional model of the subject and the subject; and
display the extracted location of the difference.

6. The information processing system according to claim 5, wherein the processor is configured to extract the location of the difference between the three-dimensional model of the subject and the subject by extracting at least one piece of information on a difference in color of the subject, information on a difference in brightness of the subject or information on a difference in pattern of the subject, in the image that is captured by photographing the subject and the image that is captured by rendering the three-dimensional model in the same direction as a photographing direction of the image of the subject.

7. The information processing system according to one of claims 5 and 6, wherein the processor is configured to receive a difference extraction level as an input.

8. The information processing system according to one of claims 5 through 7, wherein the processor is configured to display a type of the extracted difference.

9. The information processing system according to one of claims 5 through 8, wherein the processor is configured to correct the location of the difference between the three-dimensional model of the subject and the subject.

10. The information processing system according to claim 9, wherein the processor is configured to receive a difference correction level as an input.

11. A program causing a computer to execute a process, the process comprising:
generating a three-dimensional model of a subject from an image that is captured by photographing the subject; and
displaying information that results from comparing the image that is captured by photographing the subject with an image that is captured by rendering the three-dimensional model of the subject.

12. A method comprising:
generating a three-dimensional model of a subject from an image that is captured by photographing the subject; and
displaying information that results from comparing the image that is captured by photographing the subject with an image that is captured by rendering the three-dimensional model of the subject.
